# EUROPÄISCHE PATENTSCHRIFT

(11) **EP 1 814 751 B1**
(45) Veröffentlichungstag und Bekanntmachung des Hinweises auf die Patenterteilung: **10.11.2010**
(21) Anmeldenummer: 05820608.7
(22) Anmeldetag: 15.11.2005
(51) Int. Cl.: B60H 1/00, F28D 20/00

(54) **KLIMAANLAGE MIT KÄLTESPEICHER**
AIR-CONDITIONING SYSTEM WITH A COLD ACCUMULATOR
SYSTEME DE CLIMATISATION A ACCUMULATEUR DE FROID

(30) Priorität: 16.11.2004 DE 102004055339
(43) Veröffentlichungstag der Anmeldung: 08.08.2007
(73) Patentinhaber: Behr GmbH & Co. KG, 70469 Stuttgart (DE)
(72) Erfinder: BURK, Roland, 70469 Stuttgart (DE); DÜRR, Gottfried, 70437 Stuttgart (DE); FEUERECKER, Günther, 70567 Stuttgart (DE); KOHL, Michael, 74321 Bietigheim (DE); MANSKI, Ralf, 70197 Stuttgart (DE); STRAUSS, Thomas, 73274 Notzingen (DE)
(74) Vertreter: Grauel, Andreas
(86) Internationale Anmeldenummer: PCT/EP2005/012255
(87) Internationale Veröffentlichungsnummer: WO 2006/053722

(56) Entgegenhaltungen:
- US-A1- 2004 093 889
- US-A1- 2004 104 020
- PATENT ABSTRACTS OF JAPAN Bd. 2000, Nr. 10, 17. November 2000 (2000-11-17) & JP 2000 205777 A (DENSO CORP), 28. Juli 2000 (2000-07-28)

## Beschreibung

Die Erfindung betrifft eine Klimaanlage mit Kältespeicher für ein Kraftfahrzeug gemäß dem Oberbegriff des Anspruches 1.

Es ist ein Ziel der Kraftfahrzeughersteller, den Kraftstoffverbrauch des Fahrzeugs zu reduzieren. Eine Maßnahme zur Reduzierung des Kraftstoffverbrauchs ist das Abschalten des Motors bei vorübergehendem Stillstand, beispielsweise beim Halten an einer Ampel. Dieses vorübergehende Abschalten des Motors wird auch Idle-stop-Betrieb genannt. Diese Maßnahme wird bei heutigen verbrauchsarmen Fahrzeugen, wie beispielsweise bei dem sogenannten Dreiliter-Fahrzeug, bereits eingesetzt. Bei Fahrzeugen, die über den Idle-stop-Betriebsmodus verfügen, ist im innerstädtischen Verkehr ca. 25-30 % der Fahrzeit der Motor ausgeschaltet.

Dies ist ein Grund, warum derartige Fahrzeuge nicht mit einer Klimaanlage ausgerüstet sind, denn bei Motorstillstand kann auch ein für eine Klimaanlage notwendiger Kompressor nicht angetrieben werden, so dass im Idle-stop-Betrieb eine Klimaanlage die notwendige Kälteleistung nicht bereitstellen kann.

In der DE 101 56 944 A1 ist eine Klimaanlage für ein Kraftfahrzeug mit in einem Kältemittelkreis angeordnetem Kompressor und Verdampfer zum Abkühlen von zu konditionierender Luft für den Innenraum offenbart, welche einen zweiten Verdampfer zum Abkühlen der Luft aufweist, der zusätzlich ein Kältespeichermedium enthält, wobei die zu konditionierende Luft wahlweise durch jeden Verdampfer einzeln oder durch beide Verdampfer gemeinsam leitbar ist. Gemäß einer alternativen Ausführungsform ist an Stelle des zweiten Verdampfers der Verdampfer derart ausgebildet, dass er zwei Teilbereiche aufweist, und in einem der beiden Teilbereiche ein Kältespeichermedium enthält, wobei die zu konditionierende Luft wahlweise durch jeden Teilbereich einzeln oder durch beide Teilbereiche gemeinsam leitbar ist. Dabei können die Rohre, in welchen das Kältemittel durch den Verdampfer strömt, als Mehrkanalrohre ausgebildet sein, wobei einer oder mehrere der Kanäle mit dem Kältespeichermedium gefüllt sind. Das Befüllen ist jedoch relativ aufwändig, so dass entsprechende Klimaanlagen noch Wünsche offen lassen. Die US 2004/0104020 A1 zeigt eine Klimaanlage gemäß dem Oberbegriff des Anspruchs 1.

Ausgehend von diesem Stand der Technik ist es Aufgabe der Erfindung eine verbesserte Klimaanlage zur Verfügung zu stellen. Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage für ein Kraftfahrzeug vorgesehen mit einem Kältemittelkreislauf, der einen Verdampfer aufweist, welcher zum Abkühlen von zu konditionierender Luft für den Innenraum dient, wobei ein in einem Kältespeicher enthaltenes Kältespeichermedium vorgesehen ist, das im Bereich des Verdampfers angeordnet ist, dabei ist der Kältespeicher durch ein Kältespeicherelement gebildet, das eine Gestalt mit einer Mehrzahl von Kammern aufweist, wobei die einzelnen Kammern miteinander in Fluidverbindung stehen, bei Betrieb aber allenfalls ein nur unbedeutender Kältespeichermediums-Austausch zwischen den einzelnen Kammern erfolgt. Das Kältespeicherelement ist hierbei bevorzugt quer zur Längserstreckung der Rohre oder Scheiben des Verdampfers angeordnet, wobei es in Kontakt mit mehreren Rohren beziehungsweise Scheiben ist.

Das Kältespeicherelement besteht bevorzugt aus Aluminium, insbesondere innen und/oder außen beschichtetem Aluminium, Kupfer, einer Kupfer-ZinkLegierung, Kunstharz oder Kunststoff. Ein Aluminium-Behälter hat den Vorteil, dass er sich mit den übrigen Teilen des Verdampfers verlöten lässt, ein Kunststoff-Behälter hat den Vorteil, dass er flexibler gestaltet werden kann und dass in ihn auch aggressive Kältespeichermedien gefüllt werden können.

Erfindungsgemäß ist das Kältespeicherelement kammartig ausgebildet, wobei die einzelnen, den Kammzähnen entsprechenden zahnartigen Bereiche in den Verdampfer hineinragen. Der Verbindungsbereich ist hierbei bevorzugt außerhalb des Verdampfers angeordnet.

Erfindungsgemäß ist das Kältespeicherelement zwischen Rippen und/oder Rohre oder Scheiben des Verdampfers eingeschoben. Hierfür können die Rippen entsprechend flacher ausgebildet sein oder im entsprechenden Bereich ganz entfallen.

Das Kältespeicherelement ist bevorzugt mit dem Verdampfer verlötet. Dies ermöglicht eine einfache Herstellung des Verdampfers, wobei das Verlöten mit dem herkömmlichen Verlöten des Verdampfers erfolgt. Das Verlöten hat neben den Vorteilen in Hinblick auf die Herstellung auch Vorteile in Hinblick auf den Wärmeübergang zwischen den mit Hilfe des Lots verbundenen Bereichen des Verdampfers und des Kältespeicherelements.

Alternativ kann das erfindungsgemäße Kältespeicherelement auch, gegebenenfalls unter leichter Presspassung, zwischen die Rippen und/oder Rohre oder Scheiben eingeschoben werden, wobei gegebenenfalls eine zusätzliche Befestigung erforderlich ist. Hierbei kann der Wärmeübergang durch eine Wärmeleitpaste verbessert werden. Der Behälter kann in diesem Fall aus einem beliebigen Material bestehen, insbesondere kommen auch Kunststoff-Behälter, die resistent gegen aggressive Kältespeichermedien sind, in Frage.

Das Befüllen des Kältespeicherelements erfolgt vorzugsweise über eine einzige verschließbare Befüllöffnung, so dass sich der Befüllvorgang vereinfacht.

Beim Speichermedium handelt es sich bevorzugt um ein PCM-Material (phase change material), das bevorzugt kongruent schmelzende Medien, insbesondere Decanol, Tetradecan, Pentadecan, Hexadecan, Lithiumchlorat-Trihydrat, LiOO₃·3H₂O, wässrige Salzlösungen oder organische Hydrate enthält oder hieraus gebildet ist. Das Speichermedium wird insbesondere bevorzugt durch Trimethylethan mit Wasser und Harnstoff-Zusätzen gebildet. Im Speichermedium können auch Keimbildner vorgesehen sein, welche die Kristallbildung beschleunigen.

Die Phasenumwandlungstemperatur des Speichermediums liegt vorzugsweise in einem Bereich von 0°C bis 30°C, insbesondere von 2°C bis 15°C, insbesondere bevorzugt von 4°C bis 12°C.

Im Inneren des Kältespeicherelements können Einlagen, wie Rippenbleche, vorzugsweise aus Aluminium, jedoch sind auch andere Metalle oder Kunststoffe geeignet, oder andere Einbaustrukturen, wie Turbulenzeinlagen, Vliese oder Gestricke, bspw. aus Kunststoff oder Metall, oder Schäume, bspw. Metallschäume oder Kunststoffschäume, vorgesehen sein. Die Einlagen dienen unter Umständen einer Erhöhung der Festigkeit des Speicherelementes, einer Vergrößerung der wärmeleitenden Kontaktfläche und/oder einer Verkürzung der Wärmeleitwege zwischen dem Speichermedium und der Behälterwand. Diese Einlagen sind insbesondere in den zahnartigen Bereichen angeordnet, können aber zusätzlich auch im Verbindungsbereich angeordnet sein.

Im Folgenden wird die Erfindung anhand eines Ausführungsbeispiels mit Varianten unter Bezugnahme auf die Zeichnung im Einzelnen erläutert. Es zeigen:

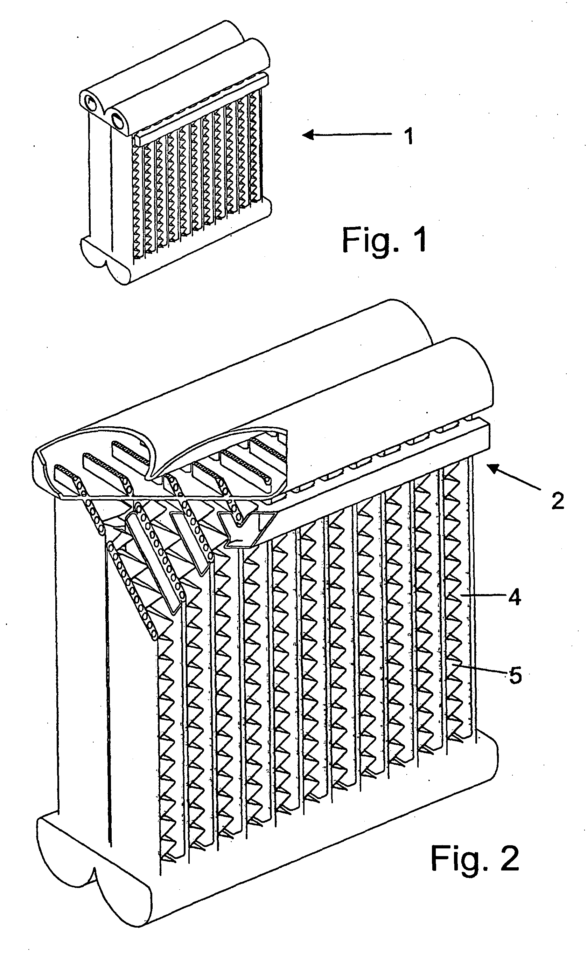

- Fig. 1: eine perspektivische Ansicht eines Wärmetauschers mit ei- nem Kältespeicher,
- Fig. 2: eine teilweise geschnittene perspektivische Ansicht des Wärmetauschers mit Kältespeicher von Fig. 1,

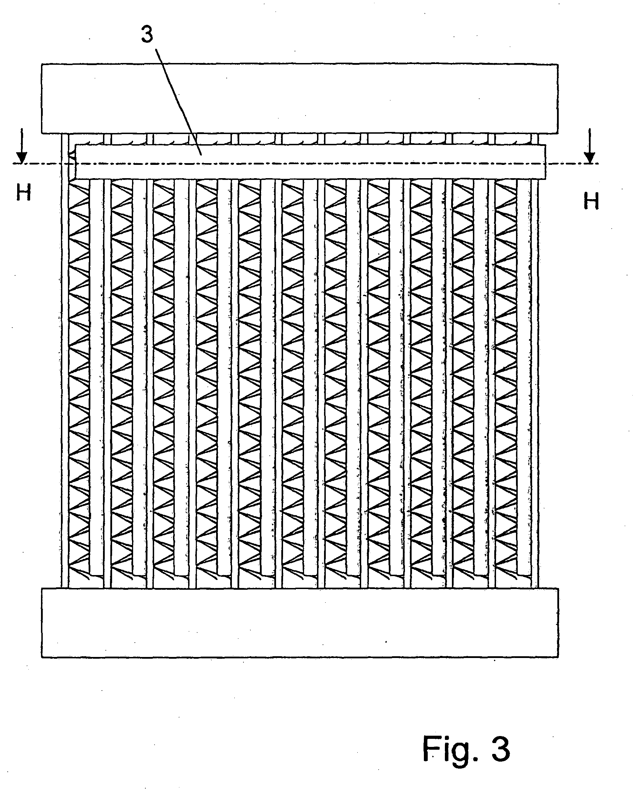

- Fig. 3: eine Seitenansicht des Wärmetauschers mit Kältespeicher von Fig. 1, und
- Fig. 4: einen Schnitt entlang Linie H-H in Fig. 3.

Eine Kraftfahrzeug-Klimaanlage zum Temperieren des Kraftfahrzeug-Innenraums mit einem Kältemittel-Kreislauf, von der nur der Verdampfer 1 dargestellt ist, weist, um auch bei einem Motorstopp zumindest über einen kurzen Zeitraum eine ausreichende Kühlleistung zur Verfügung zu stellen, einen Kältespeicher 2 bestehend aus einem Kältespeicherelement 3, welches mit einem Kältespeichermedium gefüllt ist, auf. Das Kältespeicherelement 3 ist durch einen Kunststoff- oder Metall-Behälter insbesondere aus Aluminium, Stahl, Messing und/oder Kupfer gebildet, so dass als Kältespeichermedien auch aggressive Medien, die nicht in Metall-Behälter gefüllt werden können, verwendet werden können. Als Kältespeichermedium dient vorliegend Tetra-, Penta- oder Hexadecan.

Der Verdampfer 1 weist einen im Wesentlichen herkömmlichen Aufbau mit zwei Reihen von Flachrohren 4 und dazwischen angeordneten Wellrippen 5 auf. Im oberen Bereich des Verdampfers 1 ist das Kältespeicherelement 3 auf der Rückseite desselben, das heißt auf der in normaler Luftströmungsrichtung hinten liegenden Seite, angeordnet. In dem Bereich, in welchem das Kältespeicherelement 3 angeordnet ist, sind die Wellrippen 5 etwas flacher ausgebildet, so dass ausreichend Platz für das Kältespeicherelement 3 zur Verfügung steht.

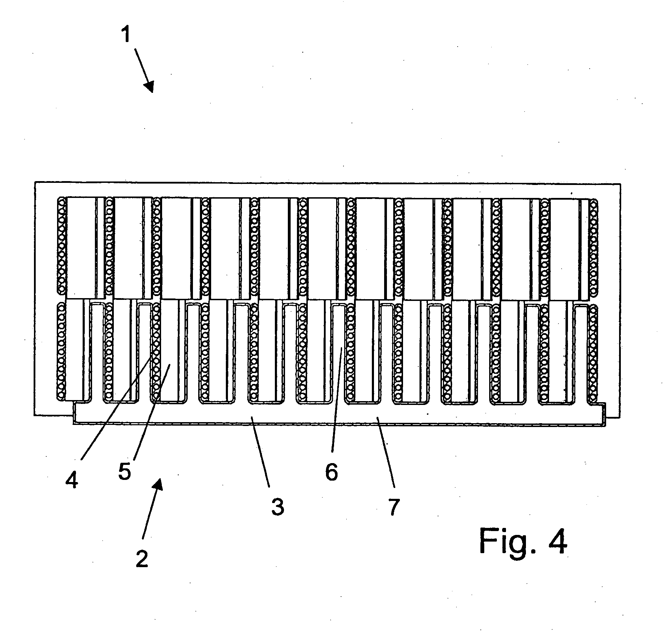

Das Kältespeicherelement 3 ist kammartig mit einer Mehrzahl von miteinander in Fluidverbindung stehenden Kammern ausgebildet, wobei die einzelnen, den Kammzähnen entsprechenden zahnartigen Bereiche 6 in den Verdampfer 1 hineinragen. Das Kältespeicherelement 3 ist mit den zahnartigen Bereichen 6 von der Rückseite her mit leichter Presspassung zwischen die Flachrohre 4 und Wellrippen 5 eingeschoben. Zudem ist vorzugsweise eine Wärmeleitpaste, welche einen verbesserten Wärmekontakt zu den Flachrohren 4 und den auf der anderen Seite angeordneten Wellrippen 5 ermöglicht, auf das Kältespeicherelement 3 aufgetragen. Die zahnartigen Bereiche 6 enden etwa in Höhe des Endes der entsprechenden Flachrohrreihe des zweireihigen Verdampfers 1 (vgl. Fig. 4). Der Verbindungsbereich 7 ist auf der Rückseite des Verdampfers 1 außerhalb desselben angeordnet. Das Kältespeicherelement 3 weist nur einen einzigen, durchgehenden Hohlraum, gebildet durch eine Mehrzahl von Kammern auf, welcher vollständig mit dem Kältespeichermedium gefüllt ist. Das Befüllen erfolgt über eine Öffnung (nicht dargestellt) in einem einzigen Arbeitsgang. Nach dem Befüllen wird die Öffnung fest verschlossen, so dass ein unbefugtes Öffnen sicher verhindert wird.

Im Inneren des durchgehenden Hohlraums sind gemäß einer nicht in der Zeichnung dargestellten Variante Einbauten oder Einlagen vorgesehen, wie beispielsweise ein Kunststoff-Vlies, welches gemäß der Variante nur in den zahnartigen Bereichen und nicht in dem Verbindungsbereich angeordnet ist.

Gemäß einer Variante besteht das Kältespeicherelement aus mit einem Kältespeichermedium gefüllten Aluminiumbehälter, die Gestalt entspricht dem des ersten Ausführungsbeispiels, welcher zwischen die Flachrohre und Wellrippen vor dem Verlöten des Verdampfers eingeschoben und mit dem Verdampfer mitgelötet wird, d.h. es handelt sich hierbei um einen integrierten, fest mit dem Verdampfer verbundenen Kältespeicher. Hierbei ist der Wärmekontakt auf Grund der Lötverbindung besser als der beim zuvor beschriebenen Ausführungsbeispiel, selbst bei Verwendung einer Wärmeleitpaste. Der Aluminiumbehälter kann auf seiner Außen- und/oder Innenseite zusätzlich beschichtet sein. Außerdem kann der Behälter innen mit Einbauten oder Einlagen, wie Rippenblechen und ähnlichem zur Verbesserung der Wärmeübertragung ausgestattet sein.

## Patentansprüche

1. Klimaanlage mit Kältespeicher, insbesondere für ein Kraftfahrzeug mit einem Kältemittelkreislauf, der einen Verdampfer (1) aufweist, welcher zum Abkühlen von zu konditionierender Luft für einen Innenraum insbesondere des Kraftfahrzeugs dient, wobei ein in einem Kältespeicher (2) enthaltenes Kältespeichermedium vorgesehen ist, das im Bereich des Verdampfers (1) angeordnet ist, **dadurch gekennzeichnet, dass**
der Kältespeicher (2) durch ein Kältespeicherelement (3) gebildet ist, das eine Gestalt mit einer Mehrzahl von Kammern aufweist, wobei die einzelnen Kammern miteinander über einen Verbindungsbereich (7) in Fluidverbindung stehen, wobei das Kältespeicherelement (3) kammartig ausgebildet ist und das Kältespeicherelement (3) zwischen Rippen (5) und/oder Rohre (4) oder Scheiben des Verdampfers (1) eingeschoben ist, wobei der Verbindungsbereich (7) außerhalb des Verdampfers (1) angeordnet ist.

2. Klimaanlage nach einem der vorhergehenden Ansprüche, **dadurch gekennzeichnet, dass** das Kältespeicherelement (3) mit dem Verdampfer (1) verlötet ist.

3. Klimaanlage nach einem der vorhergehenden Ansprüche, **dadurch gekennzeichnet, dass** das Kältespeicherelement (3) eine einzige verschließbare Befüllöffnung aufweist.

4. Klimaanlage nach einem der vorhergehenden Ansprüche, **dadurch gekennzeichnet, dass** das Kältespeicherelement (3) aus Aluminium, insbesondere beschichtetem Aluminium, oder Kunststoff besteht.

5. Klimaanlage nach einem der vorhergehenden Ansprüche, **dadurch gekennzeichnet, dass** das Kältespeichermedium durch ein PCM-Material gebildet ist.

6. Klimaanlage nach einem der vorhergehenden Ansprüchen, **dadurch gekennzeichnet, dass** die Phasenumwandlungstemperatur des Speichermediums (3) in einem Bereich von 0°C bis 30°C, insbesondere von 2°C bis 15°C, insbesondere bevorzugt von 4°C bis 12°C, liegt.

7. Klimaanlage nach einem der vorhergehenden Ansprüche, **dadurch gekennzeichnet, dass** im Kältespeicherelement mindestens eine Einlage angeordnet ist.

8. Klimaanlage nach Anspruch 7, **dadurch gekennzeichnet, dass** die Einlage durch ein Rippenblech, ein Vlies, ein Gestrick oder einen Schaum gebildet ist.

## Claims

1. An air-conditioning system comprising a cold accumulator, in particular for a motor vehicle, with a refrigerant circuit comprising an evaporator (1) for cooling the air to be conditioned for an interior compartment, wherein a cold accumulator medium is provided in a cold accumulator (2), in the region of the evaporator (1), **characterized in that**
the cold accumulator (2) is formed by a cold accumulator element (3) comprising a plurality of chambers, the individual chambers are interconnected by a fluid connection via a connecting region (7), the cold accumulator element (3) has a comb-like design, and the cold accumulator element (3) is inserted between ribs (5) and/or pipes (4) or disks of the evaporator (1), the connecting region (7) being disposed outside of the evaporator (1).

2. The air-conditioning system according to one of the preceding claims, **characterized in that** the cold accumulator element (3) is soldered to the evaporator (1).

3. The air-conditioning system according to one of the preceding claims, **characterized in that** the cold accumulator element (3) has a single closeable filling opening.

4. The air-conditioning system according to one of the preceding claims, **characterized in that** the cold accumulator element (3) is composed of aluminum, in particular coated aluminum, or plastic.

5. The air-conditioning system according to one of the preceding claims, **characterized in that** the cold accumulator medium is formed by a PCM material.

6. The air-conditioning system according to one of the preceding claims, **characterized in that** the phase-transition temperature of the accumulator medium (3) lies in a range of 0°C to 30°C, in particular 2°C to 15°C, and particularly preferably 4°C to 12°C.

7. The air-conditioning system according to one of the preceding claims, **characterized in that** at least one insert is disposed in the cold accumulator element.

8. The air-conditioning system according to claim 7, **characterized in that** the insert is formed by a ribbed sheet, a formed fabric, a weave, or a foam.

## Revendications

1. Système de climatisation à accumulateur de froid, en particulier pour un véhicule automobile comprenant un circuit de fluide frigorigène qui présente un évaporateur (1) qui sert au refroidissement d'air à conditionner pour un habitacle, en particulier du véhicule automobile, où il est prévu un milieu d'accumulateur de froid contenu dans un accumulateur de froid (2), milieu d'accumulateur de froid qui est disposé dans la zone de l'évaporateur (1),
**caractérisé en ce que** l'accumulateur de froid (2) est formé par un élément d'accumulateur de froid (3) qui présente une forme comportant une pluralité de chambres, où les différentes chambres communiquent entre elles, fluidiquement, par une zone de communication (7), où l'élément d'accumulateur de froid (3) est configuré en forme de peigne et l'élément d'accumulateur de froid (3) est inséré entre des ailettes (5) et / ou des tubes (4) ou bien des plaques de l'évaporateur (1), où la zone de communication (7) est disposée à l'extérieur de l'évaporateur (1).

2. Système de climatisation selon la revendication 1, **caractérisé en ce que** l'élément d'accumulateur de froid (3) est brasé avec l'évaporateur (1).

3. Système de climatisation selon l'une ou l'autre des revendications précédentes, **caractérisé en ce que** l'élément d'accumulateur de froid (3) présente une seule ouverture de remplissage pouvant être fermée.

4. Système de climatisation selon l'une quelconque des revendications précédentes, **caractérisé en ce que** l'élément d'accumulateur de froid (3) est en aluminium, en particulier en aluminium prélaqué ou en matière plastique.

5. Système de climatisation selon l'une quelconque des revendications précédentes, **caractérisé en ce que** le milieu de l'accumulateur de froid est formé par un matériau à changement de phase (PCM).

6. Système de climatisation selon l'une quelconque des revendications précédentes, **caractérisé en ce que** la température de changement de phase du milieu de l'accumulateur de froid (3) se situe dans une plage comprise entre 0°C et 30°C, en particulier entre 2°C et 15°C, en particulier de préférence entre 4°C et 12°C.

7. Système de climatisation selon l'une quelconque des revendications précédentes, **caractérisé en ce qu'**au moins un élément intercalaire est disposé dans l'élément d'accumulateur de froid.

8. Système de climatisation selon la revendication 7, **caractérisé en ce que** l'élément intercalaire est formé par une tôle nervurée, un voile non tissé, un tissu tricoté ou bien par une mousse.
